# EUROPEAN PATENT SPECIFICATION

(11) **EP 1 851 863 B1**
(45) Date of publication and mention of the grant of the patent: **01.05.2013**
(21) Application number: 06727260.9
(22) Date of filing: 24.02.2006
(51) Int. Cl.: H04L 12/70, H04W 72/12

(54) **Method and system for VoIP over WLAN to Bluetooth headset using advanced eSCO scheduling**
Verfahren und System für einen "VoIP über WLAN auf Bluetooth" -Kopfhörer mit erweiterter eSCO-Terminierung
Procédé et système destinés a VoIP par WLAN à destination d'un casque bluetooth utilisant un ordonnancement eSCO avancé

(30) Priority: 25.02.2005 US 65277; 23.02.2006 US 360004
(43) Date of publication of application: 07.11.2007
(73) Proprietor: Nokia Corporation, 02150 Espoo (FI)
(72) Inventor: PALIN, Arto, FIN-37830 Viiala (FI); HONKANEN, Mauri, FIN-33100 Tampere (FI); REUNAMÄKI, Jukka, FIN-33720 Tampere (FI)
(74) Representative: Söderholm, Sampsa Petteri
(86) International application number: PCT/IB2006/000386
(87) International publication number: WO 2006/090254

(56) References cited:
- EP-A1- 1 119 137
- EP-A2- 1 489 788
- WO-A1-2004/045092
- WO-A2-02/30022
- WO-A2-03/096617
- WO-A2-2004/023746
- US-A1- 2002 136 184
- US-A1- 2002 136 233
- US-A1- 2004 176 122
- US-A1- 2004 203 367
- PALIN A ET AL: "VoIP call over WLAN with Bluetooth headset - multiradio interoperability solutions", PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, vol. 3, 11 September 2005 (2005-09-11), pages 1560-1564, XP010927402, DOI: 10.1109/PIMRC.2005.1651706 ISBN: 978-978-38007-2-4

## Description

### FIELD OF THE INVENTION:

The invention disclosed broadly relates to improvements in mobile wireless terminals having more than one short-range communication interface, for reducing interference in simultaneous signal handling. The invention more particularly relates to reducing interference in voice over IP (VoIP) communications in wireless terminals having both wireless local area network (WLAN) and Bluetooth(R) interface.

### BACKGROUND OF THE INVENTION:

The best-known example of wireless personal area network (PAN) technology is the Bluetooth(R) Standard, which operates in the 2.4 GHz ISM band. Bluetooth(R) is a short-range radio network, originally intended as a cable replacement. Bluetooth(R) devices are designed to find other Bluetooth(R) devices and Bluetooth(R) access points within their roughly ten meter radio communications range. Bluetooth(R) is a time division multiplexed (TDM) system, where the basic unit is a slot of 625 microsecond duration. Each Bluetooth(R) device may be either a master or a slave at any one time, but not simultaneously. The master device initiates an exchange of data by sending a packet in a slot and the slave device must respond to the master with a packet in the next slot indicating whether it successfully received the prior packet. The slave will not transmit again until the master again transmits to it. The Bluetooth(R) Special Interest Group, Bluetooth Specification Including Core, Volume 1.2, November 5, 2003, (hereinafter "Bluetooth v1.2 Specification") describes the principles of Bluetooth(R) device operation and communication protocols. The Bluetooth v1.2 Specification is available from the Bluetooth(R) Special Interest Group at the web site www.Bluetooth.com.

A recent specification published by the Bluetooth(R) Special Interest Group, Specification of the Bluetooth System. Volume 2.0 + EDR, November 4, 2004, (hereinafter "Bluetooth v2+EDR Specification") describes the Enhanced Data Rate (EDR) Bluetooth(R), which permits speeds up to 2.1 Mbps, which while maintaining backward compatibility. The Bluetooth v2+EDR Specification is available from the Bluetooth(R) Special Interest Group at the web site www.Bluetooth.com.

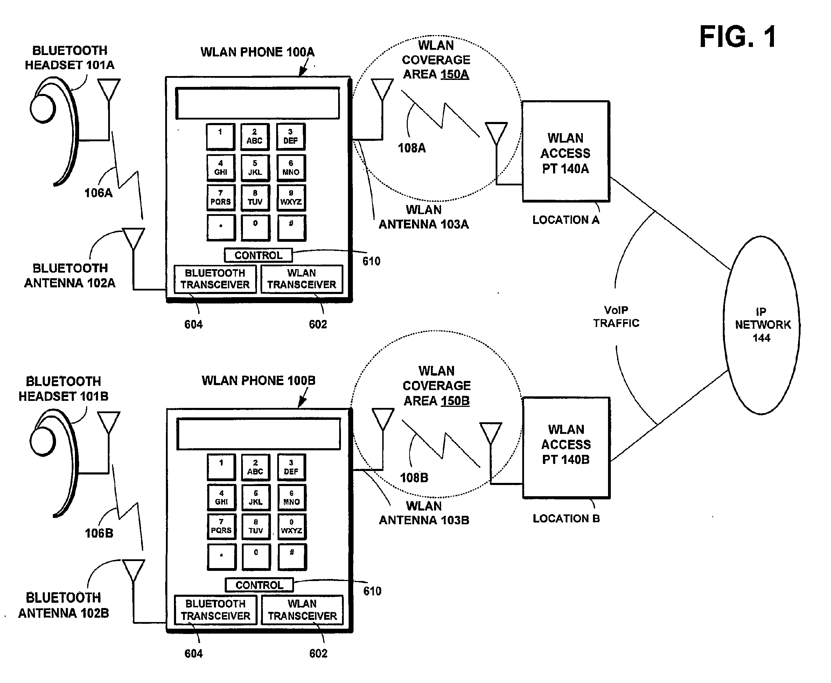

One application of the Bluetooth(R) technology is to carry audio information, which enables designing devices such as wireless headsets. Audio data is carried via Synchronous Connection-Oriented (SCO) packets using coding schemes such as Continuously Variable Slope Delta (CVSD) modulation or a Pulse Code Modulation (PCM). When a SCO link is established, the packets are exchanged over the air between the master and a slave device by alternately transmitting and receiving the encoded audio data in consecutive SCO slots. An example of a Bluetooth(R) wireless headset and a Bluetooth(R)-enabled telephone terminal is shown in Fig. 1. The telephone terminal 100A includes a Bluetooth(R) transceiver module 604 connected to the Bluetooth(R) antenna 102A. The wireless headset 101A also includes a Bluetooth(R) transceiver module connected to its own Bluetooth(R) antenna. Either the headset or the telephone terminal can initially assume the role of the master device, depending on how the connection was initiated. When a SCO link 106A is established between the telephone terminal 100A and the wireless headset 101A, packets are exchanged over the air between the master and slave device by alternately transmitting and receiving the encoded audio data in consecutive SCO slots.

Wireless local area networks (WLAN) cover a larger radio communications range of up to one hundred meters. Examples of wireless local area network technology include the IEEE 802.11 Wireless LAN Standard. The 802.11b standard for wireless local area networks (WLANs), also called Wi-Fi, is part of the 802.11 series of WLAN standards from the Institute of Electrical and Electronics Engineers (IEEE). Networks employing 802.11b operate at radio frequencies in the 2.4 GHz ISM band, the same as that for Bluetooth(R). Like other 802.11 standards, 802.11b uses the Ethernet protocol and CSMA/CA (carrier sense multiple access with collision avoidance) for path sharing. The modulation method used in 802.11b is complementary code keying (CCK), which allows higher data speeds and is less susceptible to multipath-propagation interference. An example of a WLAN is shown in Fig. 1, where the telephone terminal 100A is a mobile device, which includes an IEEE 802.11b transceiver 602 connected to a WLAN antenna 103A. The WLAN access point 140A shown at location A in Fig. 1 also has an IEEE 802.11b transceiver connected to its own WLAN antenna. When an RF communications link 108A conforming to the IEEE 802.11b Standard is established between the telephone terminal 100A and the access point 140A, data frames containing encoded audio data are exchanged over the WLAN coverage area 150A between the telephone terminal 100A and the access point 140A. The access point 140A is shown connected by wireline to the IP Network 144, to exchange data frames containing voice over internet (VoIP) encoded audio data in a IP network.

Fig. 1 shows a second WLAN access point 140B shown at location B in Fig. 1 connected by wireline to the IP Network 144, establishing a second WLAN coverage area 150B. The WLAN access point 140B has an IEEE 802.11b transceiver connected to its own WLAN antenna. The second WLAN access point 140B communicates with a second telephone terminal 100B, which includes an IEEE 802.11b transceiver connected to a WLAN antenna 103B. When an RF communications link 108B conforming to the IEEE 802.11b Standard is established between the telephone terminal 100B and the access point 140B, data frames containing voice over internet protocol (VoIP) encoded audio data are exchanged over the WLAN coverage area 150B between the telephone terminal 100B and the access point 140B. The telephone terminal 100B includes a Bluetooth(R) transceiver module connected to the Bluetooth(R) antenna 102B. The wireless headset 101B also includes a Bluetooth(R) transceiver module connected to its own Bluetooth(R) antenna. Either the headset or the telephone terminal can initially assume the role of the master device, depending on how the connection was initiated. When a SCO link 106B is established between the telephone terminal 100B and the wireless headset 101B, packets are exchanged over the air between the master and slave device by alternately transmitting and receiving the encoded audio data in consecutive SCO slots. In this manner, voice conversations can be established between users of the wireless headsets 101A and 101B.

The 802.11g specification is another standard for wireless local area networks (WLANs) that offers transmission over relatively short distances at up to 54 megabits per second (Mbps), compared to the 11 Mbps theoretical maximum with the earlier 802.11b standard. Networks employing 802.11g operate at radio frequencies in the 2.4 GHz ISM band, the same band as for Bluetooth(R) and for 802.11b. But, the 802.11g specification employs orthogonal frequency division multiplexing (OFDM) to obtain higher data speed than that for 802.11b. Computers or terminals set up for 802.11g can fall back to speeds of 11 Mbps. This feature makes 802.11b and 802.11g devices compatible within a single network. The IEEE 802.11 Wireless LAN Standard is available from the IEEE, Inc. web site http://grouper.ieee.org/groups/802/11.

Combining the short range PAN (e.g., Bluetooth(R)) and the longer range WLAN (e.g., IEEE 802.11g) features in a unitary, mobile terminal enables a user to tap into area-wide WLAN access points and to operate local I/O devices without a cable connection. An example of such a mobile terminal is the wireless telephone 100A of Fig. 1 that includes both a Bluetooth(R) transceiver and a WLAN transceiver, enabling the user to receive a voice over internet (VoIP) telephone call from a WLAN access point 140A and to converse with the caller using the wireless headset 101A via the Bluetooth(R) connection 106A between the headset and the telephone. A significant problem with a wireless telephone that includes both a Bluetooth(R) transceiver and a WLAN transceiver is that the Wireless LAN and the Bluetooth(R) networks both operate in the 2.4 GHz ISM band and therefore can interfere with each other.

The VoIP telephone call is established over Internet Protocol (IP) by using User Datagram Protocol (UDP) and Real Time Protocol (RTP). VoIP packets carry real time data in the Voice Payload. The standard for transmitting real time data in packet switched networks is ITU standard H.323, which uses RTP/UDP/IP encapsulation. Real-Time Transport Protocol (RTP) supports end-to-end delivery services of applications transmitting real-time data over IP networks. The RTP packet includes an RTP header and the Voice Payload. User Datagram Protocol (UDP) is a connectionless protocol that, like TCP, runs on top of IP networks. The UDP packet includes a UDP header and the RTP packet. UDP/IP offers a direct way to send and receive packets over an IP network. The IP packet includes an IP header, the UDP packet, and a CRC trailer field. The VoIP packet typically delivers 20 ms of speech and the size of the IP packet depends on the voice codec used in encoding the speech stream. The VoIP packet is sent to the mobile terminal 100A using the WLAN link 108A. In mobile terminal the VoIP packet is decoded and then re-encoded with a Bluetooth(R) codec, which is a Continuously Variable Slope Delta (CVSD) modulation codec or a Pulse Code Modulation (PCM) codec described in the Bluetooth(R) v1.2 Specification. In the receiving mode, the coded packet is delivered to the Bluetooth(R) headset 101A and converted to voice. The sequence is reversed in the transmitting mode, although the processing capacity of the headset may limit applicable encoding schemes and hence also technical solutions to the interference problem.

The WLAN frame structure for the IEEE 802.11b standard carries the VoIP packet in the frame body field of the Medium Access Control (MAC) frame defined in the IEEE Standard. Each wireless station and access point in an IEEE 802.11 wireless LAN implements the MAC layer service, which provides the capability for wireless stations to exchange MAC frames. The MAC frame transmits management, control, or data between wireless stations and access points. After a station forms the applicable MAC frame, the frame's bits are passed to the transceiver for transmission. The WLAN data frame carrying a VoIP packet + ACK frame includes several additional components that give it an average duration of approximately 622 microseconds, which is approximately the same duration as a Bluetooth(R) slot. The WLAN data frame begins with an interframe DIFS space of 50 microseconds, which ensures the previous transmission has completed and that it is safe to access the medium again. Next is a back-off wait interval averaging 80 microseconds to allow sharing the medium. Next is a 192 microsecond interval for the synchronization preamble. Next is the MAC frame payload of approximately 87 microseconds, which includes the VoIP packet. This is followed by the SIFS gap of ten microseconds between the data frame and its acknowledgement. This is followed by the WLAN acknowledgement (ACK) frame, which is 203 microseconds duration. The WLAN data frame is transmitted, on average, every twenty milliseconds in both the send and the receive directions.

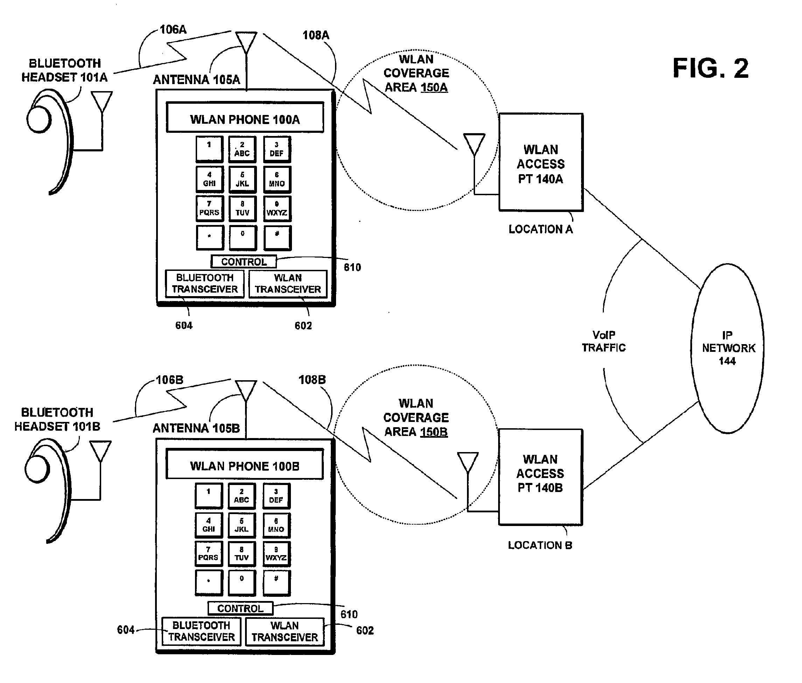

Interoperability problems arise when WLAN transceivers and Bluetooth(R) transceivers having their own separate antennas 102A and 103A are located in the same terminal 100A and have limited antenna isolation, as shown in Fig. 1. From an integration perspective, it is beneficial to utilize the same antenna and RF filter in a mobile terminal to reduce manufacturing cost and form factor, since both transceivers use the same 2.4 GHz band. In this case the access to the antenna for the WLAN and Bluetooth(R) transceivers is arranged using a switch to connect one or the other of the transceivers to the antenna port at a time. An example of this is shown in Fig. 2 where the single antenna 105A of the terminal 100A is shared by both the Bluetooth(R) transceiver and the WLAN transceiver. Similarly, the single antenna 105B of the terminal 100B is shared by both the Bluetooth(R) transceiver and the WLAN transceiver. This arrangement requires that the Bluetooth(R) and the WLAN transceivers in a terminal operate at different instants, requiring a coordinating control between the transceivers. Such a coordinating control must decide which transceiver can use the channel.

There are different requirements for the control, depending on whether the link is operating in real time for an interactive application, such as telephony, or whether the link is operating in a data transfer mode, such as file transfer protocol (FTP).

The WLAN access point is basically autonomous of the terminal, which has limited capabilities to affect downlink timing. Hence, the WLAN traffic cannot be reliably estimated by the terminal. Thus, when the access point is transmitting to the terminal, potentially many of the WLAN packets can be lost due simultaneous Bluetooth(R) activity or a wrong switch position. To maintain speech integrity, retransmissions are required.

The Bluetooth(R) v1.2 Specification defines different types of logical transports between the master and slave. Five logical transports have been defined:
1. Synchronous Connection-Oriented (SCO) logical transport, described above,
2. Extended Synchronous Connection-Oriented (eSCO) logical transport,
3. Asynchronous Connection-Oriented (ACL) logical transport,
4. Active Slave Broadcast (ASB) logical transport, and
5. Parked Slave Broadcast (PSB) logical transport.

The Synchronous Connection-Oriented (SCO) transports are point-to-point logical transports between a Bluetooth(R) master and a single slave in the piconet. The synchronous logical transports typically support time-bounded information like voice or general synchronous data. The master maintains the synchronous logical transports by using reserved slots at regular intervals. Four packets are allowed on the SCO logical transport: HV1, HV2, HV3 and DV. The HV1 packet has 10 information bytes. The HV2 packet has 20 information bytes. The HV3 packet has 30 information bytes. The DV packet is a combined data and voice packet. On each SCO channel, n-bits are sent and received in consecutive SCO slots once every Tsco slots.

In addition to the reserved slots, the Extended Synchronous Connection-Oriented (eSCO) logical transport provides a retransmission window after the reserved slots. EV packets are used on the synchronous eSCO logical transport. The packets include retransmission if no acknowledgement of proper reception is received within allocated slots. eSCO packets may be routed to the synchronous I/O port. Three eSCO packets have been defined for Bluetooth(R). The EV3 packet has between 1 and 30 information bytes and may cover up to a single time slot. The EV4 packet has between 1 and 120 information bytes and may cover to up three time slots. The EV5 packet has between 1 and 180 information bytes and may cover up to three time slots. On each eSCO channel, n-bits are sent and received in consecutive eSCO slots once every period of T_{eSCO} slots. Each packet header includes a one-bit acknowledge indication, ARQN, which indicates that the last prior packet was correctly received. With an automatic repeat request scheme, EV packets are retransmitted until acknowledgement of a successful reception is returned by the destination (or timeout is exceeded). As opposed to SCO links, eSCO links can be set up to provide limited retransmissions of lost or damaged packets inside a retransmission window of size W_{eSCO} slots.

The Asynchronous Connection-Oriented (ACL) logical transport is also a point-to-point logical transport between the Bluetooth(R) master and a slave. In the slots not reserved for synchronous logical transport, the master can establish an ACL logical transport on a per-slot basis to any slave, including the slaves already engaged in a synchronous logical transport.

The Active Slave Broadcast (ASB) logical transport is used by a Bluetooth(R) master to communicate with active slaves. The Parked Slave Broadcast (PSB) logical transport is used by a Bluetooth(R) master to communicate with parked slaves.

The Bluetooth(R) link between the terminal and the headset in the prior art typically uses the SCO transport and HV3 packet. Due to the synchronous nature of that transport, Bluetooth(R) traffic can be estimated fairly accurately by the terminal. However, in the SCO transport, there are no retransmissions and therefore if the medium is reserved by the WLAN transceiver in the terminal at a particular moment or if the WLAN transceiver in the terminal is connected to the antenna, the SCO packet is permanently lost. For a VoIP packet received by the terminal from the WLAN access point and intended to be forwarded to the Bluetooth(R) headset, a collision or packet loss will likely occur once every 16 Bluetooth(R) SCO slots, increasing the SCO packet loss by approximately 6%. If HV2 or HV1 packets are used instead of HV3, collisions will occur even more often. Instead, if the medium is being used by the Bluetooth(R) transceiver in the terminal when the WLAN transceiver in the terminal tries to access the medium, the WLAN packet is not permanently lost, but can be retransmitted as provided by the IEEE 802.11 standard. On the average, the WLAN transceiver in the terminal will have to retransmit once every 3^{rd} packet, which increases WLAN retransmissions by 30%.

The interference problem of WLAN and Bluetooth(R) transceivers operating in the same terminal has been recognized in the prior art. The IEEE has developed a recommended practice to handle this problem, which is published in the IEEE Standards 802, Part 15.2: Coexistence of Wireless Personal Area Networks with Other Wireless Devices Operating in Unlicensed Frequency Bands. This IEEE recommended practice is based on establishing a control block between the WLAN and Bluetooth(R) transceivers in a terminal. The control block assigns a higher priority to Bluetooth(R) transmissions than to WLAN transmissions and selects which one of those transceivers is to be operating at a particular instant.

The first problem with the IEEE recommended practice is that it is only a recommendation and thus it cannot be known whether and how different WLAN transceiver manufacturers will implement this recommendation for access points and mobile terminals. Secondly the IEEE recommended practice assigns the WLAN acknowledgement (ACK) packet to have priority over the Bluetooth(R) packet during WLAN retransmissions of interrupted WLAN packets. This will directly cause some permanent packet losses for the Bluetooth(R) transceiver. Additionally, the IEEE recommended practice does not utilize the more enhanced functionality provided by the later Bluetooth(R) v1.2 Standard, such as the Extended Synchronous Connection-Oriented (eSCO) logical transport or Bluetooth(R) adaptive frequency hopping (AFH). The AFH feature included in the Bluetooth(R) v1.2 Specification could be used to alleviate WLAN and Bluetooth(R) collisions by controlling Bluetooth(R) to avoid hopping on those frequencies that are currently being used by WLAN transmissions. However, the AFH does not help in cases where the antenna isolation is small (i.e. where WLAN and Bluetooth(R) transceivers are integrated into the same terminal, but have separate antennas) or the single antenna is shared between transceivers. Transmission from either of the transceivers over any part of the ISM band will bring the receiver portion of the other transceiver into saturation so that nothing can be received.

US 2002/136184 A1 discloses a centralized coordination point for wireless communication devices using multiple protocols.

EP 1 489 788 A2 discloses a wireless transmission interference avoidance on a device capable of carrying out wireless network communications.

WO 03/096617 A2 discloses a system and method for prioritization of retransmission of protocol data units to assist radio-link-control retransmission.

WO 02/30022 A2 discloses systems and methods for interference mitigation among multiple wlan networks.

US 2002/136233 A1 discloses a coordination architecture for wireless communication devices using multiple protocols.

EP 1 119 137 A1 discloses interoperability for bluetooth/IEEE 802.11.

US 2004/203367 A1 discloses a method and apparatus for improving co-existence between bluetooth and 802.11 networks.

These documents already address the case of collision between overlapping transmission of WLAN and Bluetooth (R) packets, and some of them provide initial solutions based on the attribution of different priorities.

What is needed in the prior art is a method to reduce interference in simultaneous WLAN and Bluetooth(R) signal handling in the specific case where Bluetooth (R) eSCO packets are employed, especially in voice over IP communications via a WLAN telephone to a Bluetooth(R) headset.

### SUMMARY OF THE INVENTION

According to a first example aspect of the invention there is provided an apparatus as defined in the appended claims 1 to 7.

According to a second example aspect of the invention there is provided a method as defined in the appended claims 8 to 14.

According to a third example aspect of the invention there is provided a system as defined in the appended claims 15 to 21.

According to a fourth example aspect of the invention there is provided a computer program product as defined in the appended claim 22.

The invention according to the first to fourth example aspect solves the problem of reducing interference in simultaneous WLAN and Bluetooth(R) signal handling in the specific case where Bluetooth (R) eSCO packets are employed, especially in voice over IP communications via a WLAN to a Bluetooth(R) headset.

### DESCRIPTION OF THE FIGURES

Figure 1 is a network diagram according to an embodiment of the present invention showing a voice over IP (VoIP) communications network via a WLAN telephone to a Bluetooth(R) headset. The telephone terminal includes a Bluetooth(R) transceiver module connected to a Bluetooth(R) antenna and a WLAN transceiver connected to a separate WLAN antenna.
Figure 2 is a network diagram according to an embodiment of the present invention showing a voice over IP (VoIP) communications network via a WLAN telephone to a Bluetooth(R) headset. The telephone terminal includes a Bluetooth(R) transceiver module and a WLAN transceiver connected to the same antenna.
Figure 3 is a diagram according to an embodiment of the present invention showing the Basic level audio link setup between the terminal and the Bluetooth(R) headset.
Figure 4 is a timing diagram according to an embodiment of the present invention showing the Packet prioritisation during the Bluetooth(R) eSCO connection. The WLAN transmissions have a higher priority during normal Bluetooth(R) slots and the Bluetooth(R) retransmissions have a higher priority during Bluetooth(R) retransmission slots.
Figure 5 is a timing diagram according to an embodiment of the present invention showing the Bluetooth(R) EV3 eSCO packet usage. Bluetooth(R) packets that were interrupted in a prior occurring normal slot are assigned a higher priority and are retransmitted in the following Bluetooth(R) retransmission slots.
Figure 6 is a functional block diagram according to an embodiment of the present invention showing the WLAN telephone with a control module that coordinates the operation of the Bluetooth(R) transceiver and the WLAN transceiver.
Figure 7 is a flow diagram according to an embodiment of the present invention showing the process of establishing a connection between the Bluetooth(R) terminal and the Bluetooth(R) headset to exchange voice packets that have been exchanged with the WLAN access point.
Figure 8 is a state diagram according to an embodiment of the present invention showing the operating states established by the controller to assign a higher priority to the WLAN transmissions during normal Bluetooth(R) slots and assign a higher priority to the Bluetooth(R) retransmissions during Bluetooth(R) retransmission slots.
Figures 9A and 9B are timing diagrams according to an embodiment of the present invention showing the control signals of the controller for Bluetooth(R) EV3 eSCO packet usage. Bluetooth(R) packets that were aborted because they were scheduled to begin when an existing WLAN transmission was occurring in Figure 9A or that were aborted because they were interrupted by a WLAN transmission in a prior occurring normal Bluetooth(R) slot in Figure 9B are assigned a higher priority for retransmission and are retransmitted in the following Bluetooth(R) retransmission slots.
Figure 10 is a timing diagram according to an embodiment of the present invention showing Bluetooth(R) eSCO three-slot packets, which provide a reduced power consumption.
Figure 11 is a timing diagram according to an embodiment of the present invention showing one-slot EDR packets, which can transmit at a data rate of up to 3 Mbps.
Figure 12 is a timing diagram according to an embodiment of the present invention showing WLAN packets always prioritized over Bluetooth(R) packets and the Bluetooth(R) protocol exploits its retransmission window available after the reserved slots.

### DISCUSSION OF THE PREFERRED EMBODIMENT

Fig. 1 is a network diagram according to an embodiment of the present invention showing a voice over IP (VoIP) communications network via a WLAN telephone 100A to a Bluetooth(R) headset 101A. The telephone terminal 100A includes a Bluetooth(R) transceiver 604 connected to a Bluetooth(R) antenna 102A and a WLAN transceiver 602 connected to a separate WLAN antenna 103A. The Bluetooth(R) transceiver 604 operates in the Bluetooth(R) network 106A to communicate with the wireless headset 101A using the ISM band of 2.4 GHz and the Bluetooth(R) v1.2 Specification communications protocol to exchange Bluetooth(R) packets. When a Bluetooth(R) link 106A is established between the telephone terminal 100A and the wireless headset 101A, packets are exchanged over the air between the terminal 100A and the wireless headset 101A by alternately transmitting and receiving the encoded audio data in consecutive Bluetooth(R) slots.

Fig. 2 shows the same voice over IP (VoIP) communications network as shown in Fig. 1, but with the WLAN telephone terminal 100A having its Bluetooth(R) transceiver 604 and WLAN transceiver 602 connected to the same antenna 105A.

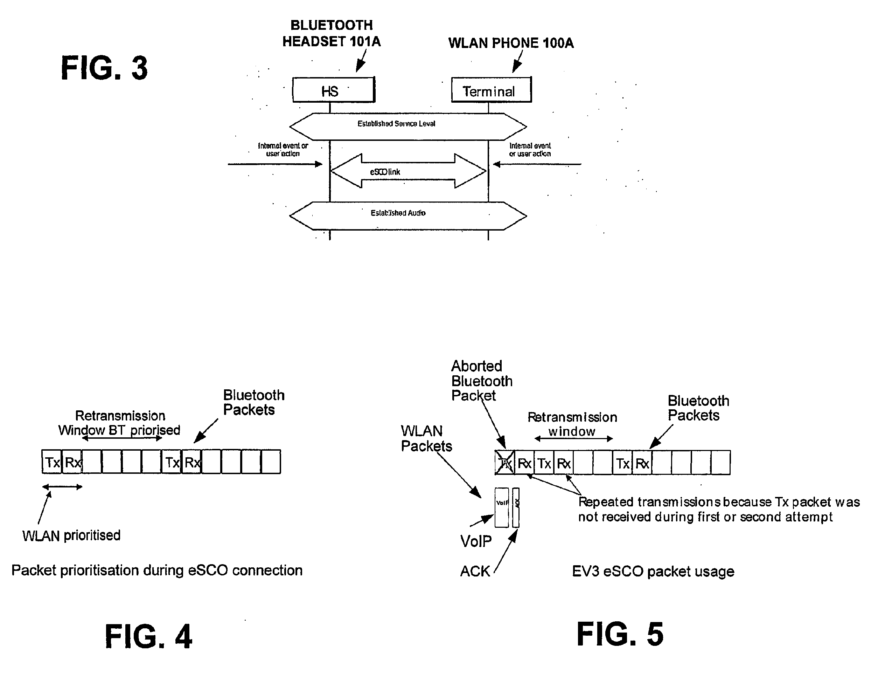

Fig. 3 shows the basic level audio link setup between the WLAN terminal 100A and the Bluetooth(R) headset 101A. The WLAN terminal 100A and the Bluetooth(R) headset 101A exchange inquiry and paging packets to establish a connection and a service level. Then by means of an internal programmed event or user action, the eSCO link is established. After this stage, the basic level audio link is established.

The WLAN access point 140A at location A in Fig. 1 also has an IEEE 802.11b transceiver connected to its own WLAN antenna. When an RF communications link 108A conforming to the IEEE 802.11b Standard is established between the telephone terminal 100A and the access point 140A, data frames containing encoded audio data are exchanged over the WLAN coverage area 150A between the telephone terminal 100A and the access point 140A. The RF communications link 108A can also conform to the IEEE 802.11g Standard. The access point 140A is shown connected by wireline to the IP Network 144, to exchange data frames containing voice over internet (VoIP) encoded audio data in a telephone network.

Fig. 1 shows a second WLAN access point 140B at location B connected by wireline to the IP Network 144, establishing a second WLAN coverage area 150B. The WLAN access point 140B has an IEEE 802.11b transceiver connected to its own WLAN antenna. The second WLAN access point 140B communicates with a second WLAN telephone terminal 100B, which includes an IEEE 802.11b transceiver connected to a WLAN antenna 103B. When an RF communications link 108B conforming to the IEEE 802.11b Standard is established between the telephone terminal 100B and the access point 140B, data frames containing voice over internet (VoIP) encoded audio data are exchanged over the WLAN coverage area 150B between the telephone terminal 100B and the access point 140B. The RF communications link 108B can also conform to the IEEE 802.11g Standard. The telephone terminal 100B includes a Bluetooth(R) transceiver module connected to the Bluetooth(R) antenna 102B. The wireless headset 101B also includes a Bluetooth(R) transceiver module connected to its own Bluetooth(R) antenna. When a Bluetooth(R) link 106B is established between the telephone terminal 100B and the wireless headset 101B, packets are exchanged over the air between the terminal 100B and the wireless headset 101B by alternately transmitting and receiving the encoded audio data in consecutive Bluetooth(R) slots. In this manner, voice conversations can be established between users of the wireless headsets 101A and 101B. Fig. 2 shows the WLAN telephone terminal 100B having its Bluetooth(R) transceiver 604 and WLAN transceiver 602 connected to the same antenna 105B.

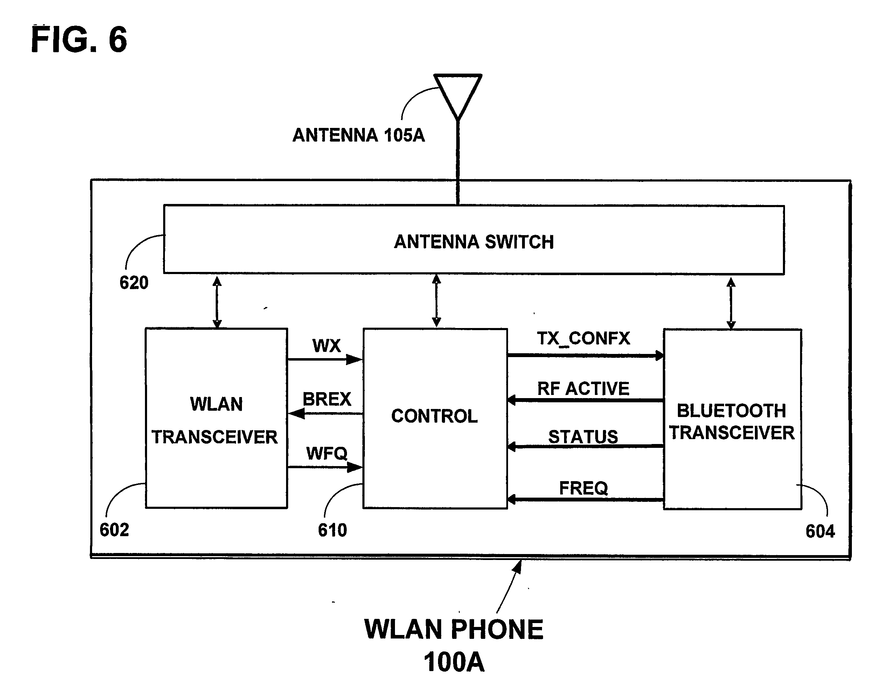

The invention provides a new mode of operation for the control module or controller 610 shown in Fig. 1 and in greater detail in Fig. 6, between the WLAN transceiver 602 and the Bluetooth(R) transceiver 604 in the terminal 100A, which assigns a higher priority to WLAN transmissions or to channel reservations, for example, with RTS and CTS signaling, than to original Bluetooth(R) transmissions, i.e., a first attempt at transmitting a Bluetooth(R) packet. The control module 610 selects which one of those transceivers is to be operating at a particular instant. The invention uses the Extended Synchronous Connection-Oriented (eSCO) logical transport in the Bluetooth(R) v1.2 Specification, as shown in Fig. 4. Fig. 4 shows the packet prioritisation during the Bluetooth(R) eSCO connection. The WLAN transmissions have a higher priority during normal Bluetooth(R) slots and the Bluetooth(R) retransmissions have a higher priority during Bluetooth(R) retransmission slots. The invention exploits the retransmission window feature in the eSCO logical transport that is available after the reserved slots. EV packets used on the synchronous eSCO logical transport include retransmission of aborted packets within the retransmission window if the transmission of the last prior Bluetooth(R) packet has been interrupted by a higher priority transmission of WLAN packets. Of course this retransmission is utilized also in the case of error in Bluetooth(R) eSCO packet. The control module 610 assigns to the aborted or retransmitted Bluetooth(R) packet a higher priority for its retransmission over the WLAN packets, to assure retransmission of the aborted Bluetooth(R) packet. Fig. 5 shows the Bluetooth(R) EV3 eSCO packet usage. Bluetooth(R) packets that were interrupted in a prior occurring normal slot are assigned a higher priority than WLAN packets and are retransmitted in the following Bluetooth(R) retransmission window.

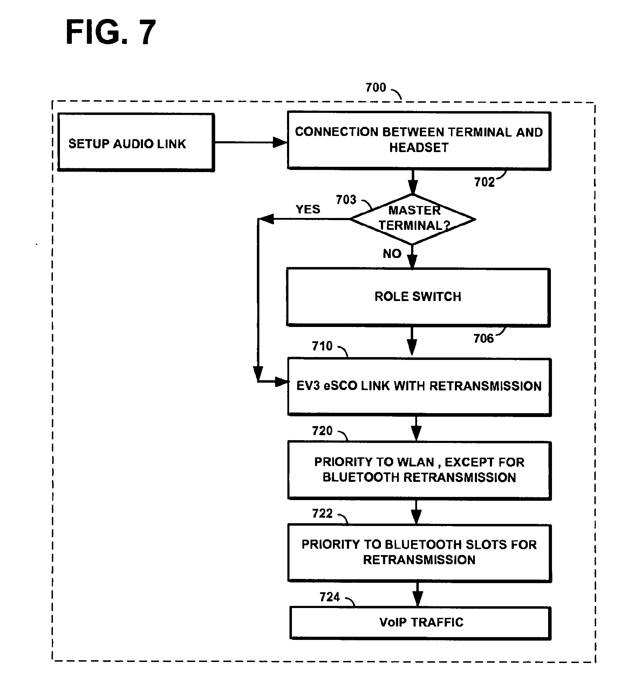

Further in accordance with the invention, if the headset is initially the master, then after the headset connection 106A has been established, the terminal 100A will perform a role switch to assume the master role. Alternately, the terminal will be the initial master and will retain that role. As the master device, the terminal 100A will set up an EV3-type eSCO link with headset 101A, which enables the headset 101A to use the retransmission feature. Figure 7 is a flow diagram showing the process 700 of establishing a connection between the Bluetooth(R) terminal 100A and the Bluetooth(R) headset 101A to exchange voice packets that have been exchanged with the WLAN access point 140A. Step 702 establishes a Bluetooth(R) connection between the terminal 100A and the headset 101A. Step 703 determines if the terminal is the initial master. If it is, then the steps flow to step 710. Alternately, if the terminal is not the initial master, then the steps flow to step 706. In Step 706 the terminal 100A performs a role switch with the headset 101A to make the terminal the master. In Step 710 the terminal 100A sets up an EV3 eSCO link with the retransmission feature between the terminal and the headset. In Step 720 the control module 610 assigns priority to WLAN slots over Bluetooth(R) slots, except for Bluetooth(R) retransmissions. In Step 722 the control module 610 assigns priority to Bluetooth(R) slots over WLAN slots for Bluetooth(R) retransmissions. In Step 724 the terminal 100A, headset 101A, and access point 140A can then begin to exchange VoIP traffic.

After an ACL link has been established by the terminal 100A, one or more eSCO links are set up to the headset 101A. The eSCO links are similar to SCO links using timing control flags and an interval of T_{eSCO} slots in duration. The eSCO link with the headset is set up to provide limited retransmissions of lost or damaged packets inside the retransmission window of size W_{eSCO} slots. (For example, the headset is configured to support the Hands Free Profile 1.2 with an eSCO repetition period of T _{eSCO} =6 slots and an eSCO window size of W _{eSCO} =2 slots using the EV3 packet format and CVSD compression encoding.)

During operation of the invention, the WLAN traffic is assigned a higher priority than the Bluetooth(R) eSCO traffic so that the first-time transmission of a Bluetooth(R) packet is suppressed or interrupted when a WLAN packet is simultaneously either being received or transmitted or when the channel is reserved to a WLAN access point and a station transmits for example, the RTS (Request to Send) signal, CTS (Clear to Send) signal, or the CTS-to-self protection signal. To assure that the suppressed or interrupted Bluetooth(R) eSCO packet is eventually retransmitted successfully, the Bluetooth(R) retransmission packet is assigned a higher priority than the WLAN traffic. Any WLAN packet known to have started transmission during the retransmission of a Bluetooth(R) eSCO packet is interrupted. The existing WLAN protocol will later retransmit the interrupted WLAN packet. In effect, collision with WLAN traffic can be reduced by scheduling the Bluetooth(R) eSCO transmission later, if necessary. In this manner WLAN packet retransmissions are used less often than in the prior art, thus imposing less of an encumbrance on the WLAN traffic.

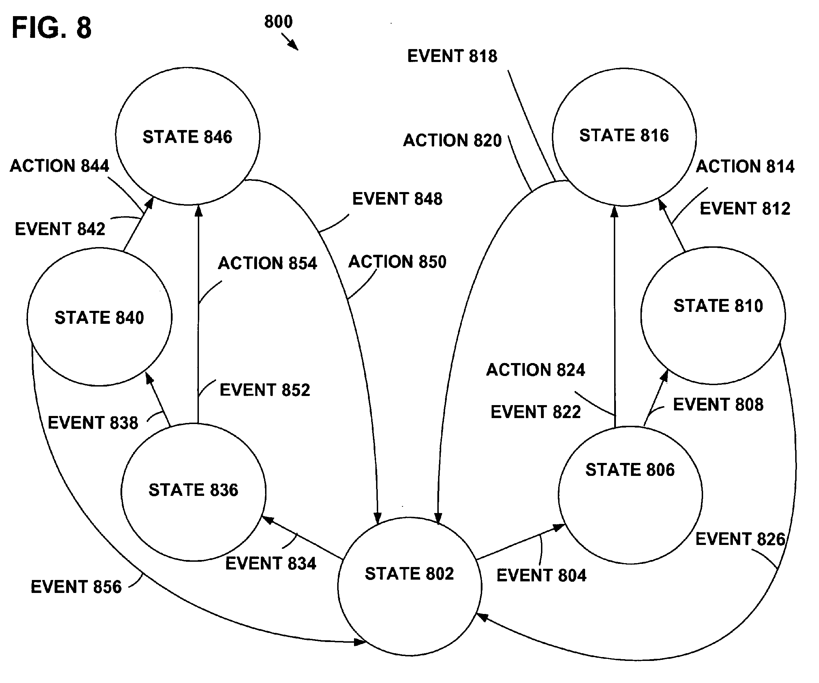

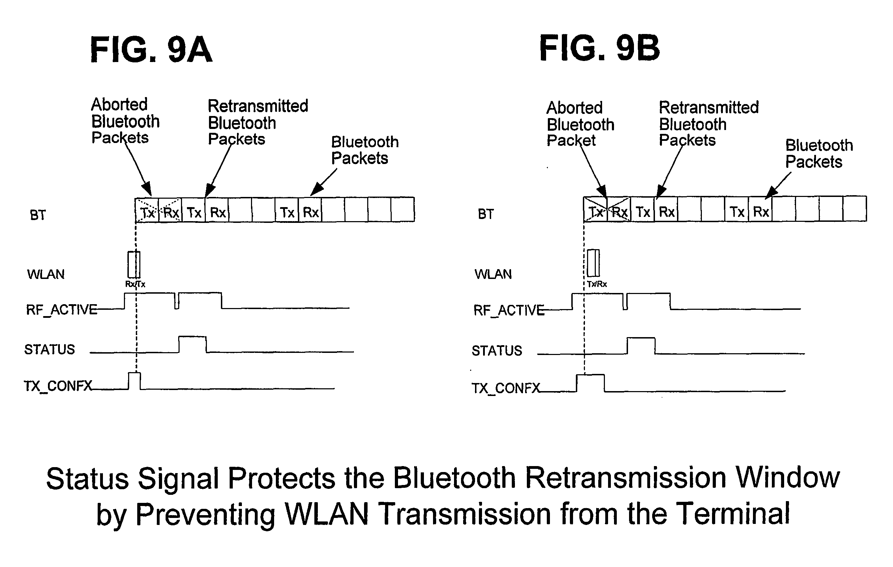

Fig. 6 shows the WLAN telephone 100A with the control module 610 that coordinates the operation of the Bluetooth(R) transceiver 604, the WLAN transceiver 602, and the antenna switch 620 that selectively connects one or the other transceiver to the antenna 105A. Fig. 8 is a state diagram showing the operating states established by the control module 610 to assign a higher priority to the WLAN transmissions during normal Bluetooth(R) slots and assign a higher priority to the Bluetooth(R) retransmissions during Bluetooth(R) retransmission slots. Figs. 9A and 9B show the control signals of the control module 610 for Bluetooth(R) EV3 eSCO packet usage. Bluetooth(R) packets that were aborted because they were scheduled to begin when an existing WLAN transmission was occurring in Figure 9A or that were aborted because they were interrupted by a WLAN transmission in a prior occurring normal Bluetooth(R) slot in Figure 9B are assigned a higher priority by the control module 610 for retransmission and are retransmitted in the following Bluetooth(R) retransmission slots.

The WLAN transceiver 602 in Fig. 6 signals to the control module 610 with the WX signal when it is scheduled to transmit or is transmitting WLAN packets. The Bluetooth(R) transceiver 604 signals to the control module 610 with the STATUS signal whether it has an aborted Bluetooth(R) packet ready for retransmission. The control module 610 signals to the Bluetooth(R) transceiver 604 with the TX_CONFX signal if it is to abort any transmission of an original Bluetooth(R) packet. The control module 610 signals to the WLAN transceiver 602 with the BREX signal if it is to abort any scheduled WLAN packet transmission or abort transmitting any WLAN packets. The Bluetooth(R) transceiver 604 also signals to the control module 610 with the RF_ACTIVE signal whether it is transmitting a Bluetooth(R) packet. The Bluetooth(R) transceiver 604 in Figure 6 signals to the control module 610 with the FREQ signal to provide information when Bluetooth(R) is hopping into restricted channel. The WLAN transceiver 602 signals to the control module 610 with the WFQ signal to provide its timing.

If the STATUS signal is low, then there is no aborted Bluetooth(R) packet ready for retransmission. In response to when the WLAN transceiver 602 signals to the control module 610 with the WX signal that it is scheduled to transmit or is transmitting WLAN packets in combination with the STATUS signal being low, indicating that there is no aborted Bluetooth(R) packet ready for retransmission, the control module 610 raises the TX_CONFX signal to the Bluetooth(R) transceiver 604 causing it to abort any transmission of an original Bluetooth(R) packet. This is shown in the state diagram of Figure 8 and the timing diagrams of Figures 9A and 9B.

If the STATUS signal is high, indicating that there is an aborted Bluetooth(R) packet ready for retransmission, then in response the control module 610 signals to the WLAN transceiver 602 with the BREX signal to abort any scheduled WLAN packet transmission or abort transmitting any WLAN packets. This enables the Bluetooth(R) transceiver 604 to retransmit the aborted Bluetooth(R) packet. This is shown in the state diagram of Figure 8 and the timing diagrams of Figures 9A and 9B.

The control module 610, the WLAN transceiver 602, and the Bluetooth(R) transceiver 604 of Figure 6 can be a set of LSI circuit chips. The control module 610 can be implemented as a programmed microcontroller chip that contains all the components comprising a controller, including a CPU, RAM, some form of ROM to store program code instructions, I/O ports, and timers. The control module 610 can also be implemented as an Application-Specific Integrated Circuit (ASIC). Alternately, the control module 610 circuitry can be integrated into the LSI circuit chip of the Bluetooth(R) transceiver 604 or integrated into the LSI circuit chip of the WLAN transceiver 602.

From the headset 101A point of view, when the terminal 100A is in receive mode, the headset 101A can transmit the eSCO packet to the terminal 100A during an eSCO slot. If the headset 101A did not receive the previous eSCO packet from the terminal 100A in the scheduled master-to-slave slot because of a WLAN transmission by the terminal 100A, the headset 101A will recognize the omission and set the acknowledge indication ARQN bit ='0' in its reply eSCO packet. Although the terminal 100A may not receive the reply eSCO packet because of the WLAN transmission, it does not matter because the terminal 100A knows that its last prior eSCO transmission was preempted and it will use the eSCO retransmission window to retransmit the aborted eSCO packet. An advantage of the invention is that it does not require a change to the WLAN or Bluetooth(R) standard, but merely a proprietary change to the Bluetooth(R) side of the terminal 100A. The headset 101A, itself, operates according the hands free profiles for headsets, which support eSCO.

The state diagram 800 of Figure 8 shows the operating states established by the control module 610 to assign a higher priority to the WLAN transmissions during normal Bluetooth(R) slots and assign a higher priority to the Bluetooth(R) retransmissions during Bluetooth(R) retransmission slots. The state diagram 800 for terminal 100A begins in the quiescent State 802: where the terminal is waiting for traffic. In State 802, if Event 804 occurs where an original Bluetooth(R) packet is scheduled for an eSCO transmission slot, then the state transitions to State 806 where the terminal is waiting for the eSCO slot to begin to enable transmitting the Bluetooth(R) packet. In State 806, if Event 808 occurs where the terminal starts transmitting the Bluetooth(R) packet, then the state transitions to State 810 where the terminal is actively transmitting the Bluetooth(R) packet. In State 810, if Event 812 occurs where a higher priority WLAN packet begins transmitting, then Action 814 is taken where the terminal aborts transmitting the original Bluetooth(R) packet and the state transitions to State 816 where the terminal buffers the aborted Bluetooth(R) packet. In State 816, if Event 818 occurs where the terminal completes transmitting the WLAN packet, then the Action 820 is taken where the terminal retransmits the aborted Bluetooth(R) packet in an eSCO retransmission slot and the state transitions back to the quiescent State 802 where the terminal is waiting for traffic. There is a second possible event that can occur in State 806. In State 806, if Event 822 occurs where a higher priority WLAN packet is scheduled to transmit, then Action 824 is taken where the terminal aborts the original Bluetooth(R) packet and the state transitions to State 816. There is a second possible event that can occur in State 810. In State 810, if Event 826 occurs where terminal completes transmitting the Bluetooth(R) packet, then the state transitions back to the quiescent State 802: where the terminal is waiting for traffic.

In State 802 of Figure 8, if Event 834 occurs where an original WLAN packet is scheduled for a WLAN transmit slot, then the state transitions to State 836 where the terminal is waiting for the WLAN slot to begin to enable transmitting the WLAN packet. In State 836, if Event 838 occurs where the terminal starts transmitting the WLAN packet, then the state transitions to State 840 where the terminal is actively transmitting the WLAN packet. In State 840, if Event 842 occurs where a higher priority retransmission begins of an aborted Bluetooth(R) packet, then Action 844 is taken where the terminal aborts the WLAN packet and the state transitions to State 846 where the terminal buffers the aborted WLAN packet. In State 846, if Event 848 occurs where the terminal completes retransmitting the aborted Bluetooth(R) packet, then Action 850 is taken where the terminal retransmits the aborted WLAN packet and the state transitions back to the quiescent State 802 where the terminal is waiting for traffic. There is a second possible event that can occur in State 836. In State 836, if Event 852 occurs where a higher priority retransmission of an aborted Bluetooth(R) packet is scheduled to transmit, the Action 854 is taken where the terminal aborts the WLAN packet and transitions to State 846. There is a second possible event that can occur in State 840. In State 840, if Event 856 occurs where the terminal completes transmitting the WLAN packet, then the state transitions back to the quiescent State 802 where the terminal is waiting for traffic.

The control module 610, the WLAN transceiver 602, and the Bluetooth(R) transceiver 604 of Figure 6 can include programmed microcontroller chips that contain all the components comprising a controller, including a CPU processor, RAM storage, some form of ROM to store program code, I/O ports, and timers.

The Bluetooth(R) transceiver 604 of Figure 6 can include a programmed microcontroller chip that stores in its ROM program code for execution by its processor for operating the Bluetooth(R) transceiver in the Bluetooth(R) network. The WLAN transceiver 602 of Figure 6 can include a programmed microcontroller chip that stores program code in its ROM for execution by its processor for operating the WLAN transceiver in the WLAN network.

The control module 610 of Figure 6 can include a programmed microcontroller chip that stores in its ROM program code for execution by its processor. The program code implements the method of the invention, for example as represented by the state diagram 800 of Figure 8. The program code in the control module 610, when executed by its processor, assigns a higher transmission priority to WLAN packets than to Bluetooth(R) packets when transmission of WLAN packets overlaps a first occurring transmission of Bluetooth(R) packets, to abort transmission of the first occurring Bluetooth(R) packets. The program code in the control module 610, when executed by its processor, assigns a higher transmission priority to the aborted Bluetooth(R) packet than to the WLAN packets when transmission of the WLAN packets overlaps the retransmission of the aborted Bluetooth(R) packet, to transmit the aborted Bluetooth(R) packet.

In an alternate embodiment of the invention, after the headset connection has been established by the terminal and it performs a role switch to assume the master role, the terminal will set up an EV5 eSCO link with headset. The EV5 packet type enables power consumption in the headset to be reduced because the packets are sent less frequently and the protocol-to-packet overhead is smaller. The example parameters for the eSCO connection with EV5 packets are T _{eSCO} =32 slots and W _{eSCO} =2 using EV5 and CVSD voice coding.

The reason to select T eSCO =32 slots is that with this value the EV5 eSCO packet is aligned at every 32 slots, which is the same time interval as the average interval of 20ms for the VoIP WLAN packet. It should also be noted that with these parameters and the maximum EV5 packet data of 180 bytes, the average data rate is 72kbps, which means that roughly every 12th packet does not have to be sent. Alternately, if a steady 64kbps data rate is desired, a 160 byte payload can be used. This is not limited to any particular voice coding scheme, but can be used as long as the required data rate is below 72 kbps.

Although establishing the Bluetooth(R) connection 106A with the terminal 100A as the master device is the preferred way to operate the invention, retaining the headset 101A in the role of the master device can also be used to establish the Bluetooth(R) connection 106A. In this alternate embodiment, the terminal and headset are programmed so that the headset remains the master device in establishing the Bluetooth(R) connection. As the master device, the headset will set up the EV3-type or EV5-type eSCO link with the terminal, which enables the headset to use the retransmission feature as described above.

In another alternate embodiment of the invention, the Enhanced Data Rate (EDR) Bluetooth(R) packets can be used, as provided in the Bluetooth(R) v2+EDR Specification. The EDR packets make it possible to increase the Bluetooth(R) voice packet interval and thus to leave more time for WLAN packets to be transmitted. The EDR eSCO packets have the same retransmission control as described above for the Bluetooth(R) v1.2 Specification eSCO packets and they have the advantage of transmitting at a raw data rate of from 2 Mbps to 3 Mbps. Both one-slot and three-slot EDR packets are available; the one-slot packet is preferred to keep latency to a minimum. The Bluetooth(R) transceiver 604 in Figure 6 signals to the control module 610 with the FREQ signal that BT is about to transmit on a restricted channel..

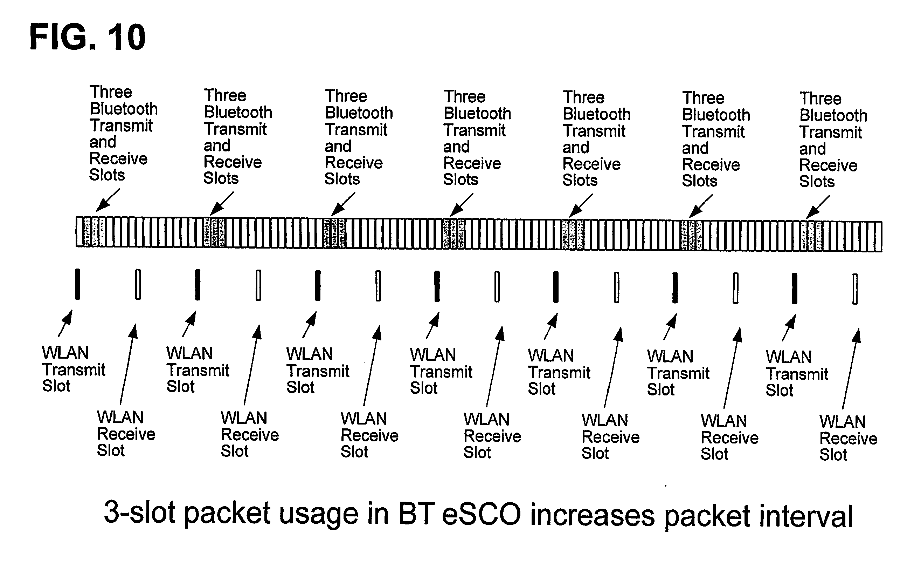

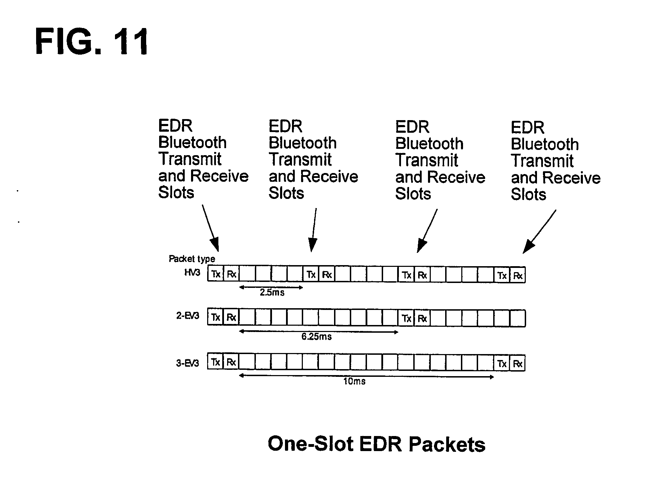

Figure 10 shows the timing diagram of Bluetooth(R) eSCO three-slot packets, which provide a reduced power consumption. Figure 11 shows the timing diagram for one-slot EDR packets, which can transmit at a raw data rate of up to 3 Mbps.

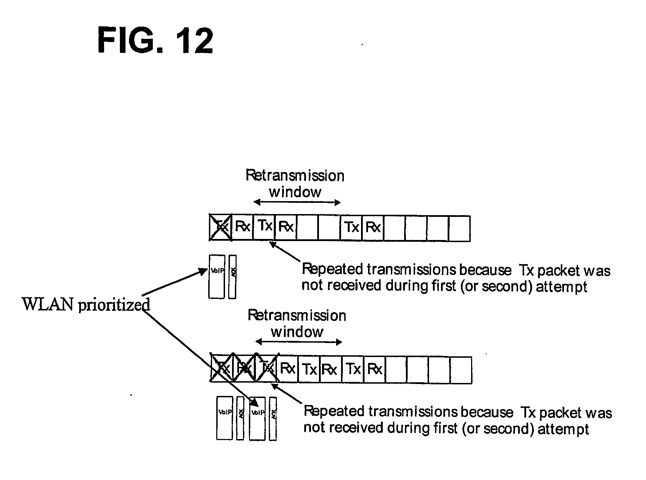

In a further alternate embodiment of the invention, WLAN packets are always prioritized over Bluetooth(R) packets and the Bluetooth(R) protocol exploits its retransmission window available after the reserved slots. Figure 12 is a timing diagram showing WLAN packets always prioritized over Bluetooth(R) packets and the Bluetooth(R) protocol exploits its retransmission window available after the reserved slots. The EV packets used on the synchronous eSCO logical transport retransmit aborted packets within the retransmission window if the transmission of the prior Bluetooth(R) packet has been interrupted by higher priority transmission of WLAN packets. Thus, in this embodiment, WLAN packets can be transmitted normally according to the IEEE 802.11 Wireless LAN Standard and there is no retransmission necessary due to a collision with a Bluetooth(R) packet.

In this embodiment, the utilization of Bluetooth(R) eSCO retransmission enables a Bluetooth(R) /WLAN prioritization which does not require retransmission of the WLAN packets. This is achieved in this embodiment when the WLAN packets are always prioritized over Bluetooth(R) packets, because the loss rate of the Bluetooth(R) packets using eSCO with retransmission is quite low. This is true especially with EV5, 2-EV3, 2-EV5, 3-EV3 and 3-EV5 Bluetooth(R) packets. The eSCO retransmission feature enables the Bluetooth(R) packet loss rate to be held to a tolerable level in this embodiment. The alternate embodiment is illustrated with Figure 12, which shows the Bluetooth(R) EV3 eSCO packet usage. In the alternate embodiment where WLAN packets are always prioritized over Bluetooth(R) packets, whenever Bluetooth(R) packets are interrupted in a prior occurring normal slot by a higher priority WLAN packet, the Bluetooth(R) packets will wait to be retransmitted until there are no more higher priority WLAN packets. Then the aborted Bluetooth(R) packets will be retransmitted in the following Bluetooth(R) retransmission window. Simulations have shown that the Bluetooth(R) eSCO retransmission feature enables the Bluetooth(R) packet loss rate to be held to a tolerable level in this embodiment.

The resulting invention solves the problem of reducing interference in simultaneous WLAN and Bluetooth(R) signal handling, especially in voice over IP communications via a WLAN to a Bluetooth(R) headset.

The resulting invention is particularly advantageous in areas of high WLAN traffic, such as in a business office, where frequent retransmission of interrupted WLAN packets would significantly impair WLAN traffic capacity. A further advantage of the invention is the ability of the terminal to predict the need to transmit Bluetooth(R) packets because SCO and eSCO packets are transmitted at known fixed intervals. Still another advantage of the invention is that it does not require a change to the WLAN or Bluetooth(R) standard, but merely a proprietary change to the Bluetooth(R) side of the terminal.

Although specific embodiments of the invention have been described, a person skilled in the art will understand that changes can be made to the specific embodiments without departing from the scope of the claims. For example the wireless terminal 100A can exchange with the wireless access point 140A IEEE 802.11 protocol data units containing data for other types of I/O devices, such as a printer or a bar code scanner, for example. The wireless terminal 100A can exchange encoded data in Bluetooth(R) eSCO packets with a wireless I/O device such as a Bluetooth(R)-enabled printer or a Bluetooth(R)-enabled bar code scanner, for example. Additionally, the wireless PAN 106A connecting the terminal 100A to the headset 101A can operate in either a radiofrequency band, an infrared band, or an optical band.

## Claims

1. An apparatus, comprising:
means for operating a first transceiver (604) in a wireless Bluetooth network (106A) for communicating Bluetooth Extended Synchronous Connection-Oriented, eSCO, packets in accordance with a Bluetooth communications protocol and operating in a wireless communications band;
means for operating a second transceiver (602) in a wireless local area network, WLAN, network (108A) for communicating WLAN packets in accordance with a WLAN communications protocol and operating in the same band as said wireless communications band;
means (610) for assigning a higher transmission priority to said WLAN packets than to said Bluetooth eSCO packets responsive to transmission or retransmission of said WLAN packets overlapping a first occurring transmission of said Bluetooth eSCO packets, and for aborting transmission of said first occurring Bluetooth eSCO packet; and
means (610) for reassigning a higher transmission priority to said aborted Bluetooth eSCO packet than to said WLAN packets responsive to transmission of said WLAN packets overlapping the retransmission of said aborted Bluetooth eSCO packet, and for transmitting said aborted Bluetooth eSCO packet in a retransmission window thereof.

2. The apparatus of claim 1, wherein
said WLAN communications protocol conforms with IEEE 802.11b WLAN Standard.

3. The apparatus of claim 1, further wherein
said WLAN packets conform with IEEE 802.11b protocol data units.

4. The apparatus of claim 1, wherein
said retransmission of said aborted Bluetooth eSCO packet is in an eSCO retransmission slot.

5. The apparatus of claim 1, wherein:
said apparatus is configured for exchanging Voice over Internet Protocol, VoIP, packets as said WLAN packets with a wireless access point (140A) conforming with IEEE 802.11b WLAN Standard in WLAN communications; and
said apparatus is configured for exchanging encoded audio data in Bluetooth eSCO packets with a wireless headset (101A) using Bluetooth communications protocol.

6. The apparatus of claim 1, wherein:
said apparatus is configured for exchanging VoIP packets as said WLAN packets with a wireless access point (140A) conforming with IEEE 802.11b WLAN Standard in said WLAN communications;
said apparatus is configured for exchanging encoded audio data in Bluetooth eSCO packets with a wireless headset (101A) using Bluetooth Enhanced Data Rate, EDR, protocol as said Bluetooth communications protocol; and
said apparatus is configured for establishing a connection with said headset (101A) and setting up an EDR packet eSCO link with said headset (101A).

7. The apparatus of claim 1, further comprising:
a controller (610) is configured for enabling communication of said aborted Bluetooth eSCO packets responsive to transmission of said WLAN packets ceasing.

8. A method performed by a wireless terminal (100A), comprising:
operating (710) a first transceiver in a wireless Bluetooth network (106A) for communicating Bluetooth Extended Synchronous Connection-Oriented, eSCO, packets in accordance with a Bluetooth communications protocol and operating in a wireless communications band;
operating a second transceiver in a wireless local area network, WLAN, network (108A) for communicating WLAN packets in accordance with a WLAN communications protocol and operating in the same band as said wireless communications band;
assigning (720) a higher transmission priority to said WLAN packets than to said Bluetooth eSCO packets when transmission or retransmission of said WLAN packets overlaps a first occurring transmission of said Bluetooth eSCO packets, to abort transmission of said first occurring Bluetooth eSCO packet; and
reassigning (722) a higher transmission priority to said aborted Bluetooth eSCO packet than to said WLAN packets when transmission of said WLAN packets overlaps the retransmission of said aborted Bluetooth eSCO packet, to transmit said aborted Bluetooth eSCO packet in a retransmission window thereof.

9. The method of claim 8, further comprising:
said WLAN communications protocol conforms with IEEE 802.11b WLAN Standard.

10. The method of claim 8, further comprising:
said WLAN packets conform with IEEE 802.11b protocol data units.

11. The method of claim 8, further comprising:
said retransmission of said aborted Bluetooth eSCO packet is in an eSCO retransmission slot.

12. The method of claim 8, further comprising:
said wireless terminal (100A) exchanging Voice over Internet Protocol, VoIP, packets as said WLAN packets with a wireless access point (140A) using IEEE 802.11 WLAN Standard as said WLAN communications protocol; and
said wireless terminal (100A) exchanging encoded audio data in Bluetooth eSCO packets with a wireless headset (101A) using Bluetooth communications protocol.

13. The method of claim 8, further comprising:
said wireless terminal (100A) exchanging VoIP packets as said WLAN packets with a wireless access point (140A) conforming with IEEE 802.11b WLAN Standard in said WLAN communications; and
said wireless terminal (100A) exchanging encoded audio data in Bluetooth eSCO packets with a wireless headset (101A) using Bluetooth Enhanced Data Rate, EDR, protocol; and
said wireless terminal (100A) establishing a connection with said headset (101A) and setting up an EDR packet eSCO link with said headset.

14. The method of claim 8, further comprising:
a controller (610) enabling communication of said aborted Bluetooth eSCO packets when transmission of said WLAN packets ceases.

15. A system, comprising:
a wireless terminal (100A);
a wireless headset (101A);
a first transceiver (604) in said wireless terminal (100A) configured for operating in a wireless Bluetooth network (106A) for communicating Bluetooth Extended Synchronous Connection-Oriented, eSCO, packets in accordance with a Bluetooth communications protocol to communicate with said wireless headset (101A) in a wireless communications band;
a wireless access point (140A);
a second transceiver (602) in said wireless terminal (100A) configured for operating in a wireless local area network, WLAN, network (108A) for communicating WLAN packets in accordance with a WLAN communications protocol to communicate with said wireless access point (140A) in the same band as said communications band; and
a controller (610) in said wireless terminal (100A) coupled to said first and second transceivers, configured for assigning a higher transmission priority to said WLAN packets than to said Bluetooth eSCO packets responsive to transmission or retransmission of said WLAN packets overlapping a first occurring transmission of said Bluetooth eSCO packets, and configured for aborting transmission of said first occurring Bluetooth eSCO packet;
said controller (610) configured for reassigning a higher transmission priority to said aborted Bluetooth eSCO packet than to said WLAN packets responsive to transmission of said WLAN packets overlapping the retransmission of said aborted Bluetooth eSCO packet, and configured for transmitting said aborted Bluetooth eSCO packet in a retransmission window thereof.

16. The system of claim 15, wherein
said WLAN communications protocol conforms with IEEE 802.11b WLAN Standard.

17. The system of claim 15, wherein
said WLAN packets conform with IEEE 802.11b protocol data units.

18. The system of claim 15, wherein
said retransmission of said aborted Bluetooth eSCO packet is in an eSCO retransmission slot.

19. The system of claim 15, wherein
said wireless terminal (100A) is configured for exchanging Voice over Internet Protocol, VoIP, packets as said WLAN packets with said wireless access point (140A) conforming with IEEE 802.11b WLAN Standard in said WLAN communications; and
said wireless terminal (100A) is configured for exchanging encoded audio data in Bluetooth eSCO packets with said wireless headset (101A) using Bluetooth communications protocol.

20. The system of claim 15, wherein
said wireless terminal (100A) is configured for exchanging VoIP packets as said WLAN packets with said wireless access point (140A) conforming with IEEE 802.11b WLAN Standard in said WLAN communications;
said wireless terminal (100A) is configured for exchanging encoded audio data in Bluetooth eSCO packets with said wireless headset (101A) using Bluetooth Enhanced Data Rate, EDR, protocol as said Bluetooth communications protocol; and
said wireless terminal (100A) is configured for establishing a connection with said headset (101A) and setting up an EDR packet eSCO link with said headset (101A).

21. The system of claim 15, wherein
said controller (610) is configured for enabling communication of said aborted Bluetooth eSCO packets responsive to transmission of said WLAN packets ceasing.

22. A computer program product comprising a computer useable medium having computer program logic recorded thereon for enabling a processor in a computer system to control a wireless communications device to carry out the method of any of claims 8-14 when the computer program logic is run on the processor.

## Patentansprüche

1. Vorrichtung, Folgendes umfassend:
ein Mittel zum Betreiben eines ersten Transceivers (604) in einem funkbasierten Bluetooth-Netz (106A) zum Übertragen von Bluetooth Extended Synchronous Connection-Oriented, eSCO, Paketen gemäß einem Bluetooth-Kommunikationsprotokoll, der in einem Funk-Kommunikationsband arbeitet;
ein Mittel zum Betreiben eines zweiten Transceivers (602) in einem funkbasierten lokalen Netz, WLAN, (108A) zum Übertragen von WLAN-Paketen gemäß einem WLAN-Kommunikationsprotokoll, der in demselben Band wie das Funk-Kommunikationsband arbeitet;
ein Mittel (610) zum Zuweisen einer höheren Übertragungspriorität an die WLAN-Pakete als an die Bluetooth-eSCO-Pakete in Reaktion darauf, dass eine Übertragung oder erneute Übertragung der WLAN-Pakete mit einer erstmals auftretenden Übertragung der Bluetooth-eSCO-Pakete überlappt, und zum Abbrechen der Übertragung des erstmals auftretenden Bluetooth-eSCO-Pakets; und
ein Mittel (610) zum wieder Zuweisen einer höheren Übertragungspriorität an das abgebrochene Bluetooth-eSCO-Paket als an die WLAN-Pakete, und dies in Reaktion darauf, dass die Übertragung der WLAN-Pakete mit der erneuten Übertragung des abgebrochenen Bluetooth-eSCO-Pakets überlappt, und zum Übertragen des abgebrochenen Bluetooth-eSCO-Pakets in einem zugehörigen Fenster zur erneuten Übertragung.

2. Vorrichtung nach Anspruch 1, wobei das WLAN-Kommunikationsprotokoll den IEEE 802.11b WLAN-Standard erfüllt.

3. Vorrichtung nach Anspruch 1, wobei außerdem die WLAN-Pakete Dateneinheiten des IEEE 802.11b Protokolls entsprechen.

4. Vorrichtung nach Anspruch 1, wobei die erneute Übertragung des abgebrochenen Bluetooth-eSCO-Pakets in einem eSCO-Slot zur erneuten Übertragung stattfindet.

5. Vorrichtung nach Anspruch 1, wobei:
die Vorrichtung dafür eingerichtet ist, in WLAN-Kommunikationen entsprechend dem IEEE 802.11b WLAN-Standard Voice over Internet Protocol, VoIP, Pakete als die WLAN-Pakete mit einem funkbasierten Zugangspunkt (140A) auszutauschen; und
die Vorrichtung dafür eingerichtet ist, unter Verwendung eines Bluetooth-Kommunikationsprotokolls encodierte Audiodaten in Bluetooth-eSCO-Paketen mit einem funkbasierten Headset (101A) auszutauschen.

6. Vorrichtung nach Anspruch 1, wobei:
die Vorrichtung dafür eingerichtet ist, in den WLAN-Kommunikationen entsprechend dem IEEE 802.11b WLAN-Standard VoIP-Pakete als die WLAN-Pakete mit einem funkbasierten Zugangspunkt (140A) auszutauschen;
die Vorrichtung dafür eingerichtet ist, encodierte Audiodaten in Bluetooth-eSCO-Paketen mit einem funkbasierten Headset (101A) auszutauschen, und dies unter Verwendung des Bluetooth Enhanced Data Rate, EDR, Protokolls als dem Bluetooth-Kommunikationsprotokoll; und
die Vorrichtung dafür eingerichtet ist, eine Verbindung mit dem Headset (101A) herzustellen und eine EDR-Paket-eSCO-Übertragungsstrecke mit dem Headset (101A) einzurichten.

7. Vorrichtung nach Anspruch 1, außerdem Folgendes umfassend:
einen Kontroller (610), der dafür eingerichtet ist, die Übertragung der abgebrochenen Bluetooth-eSCO-Pakete zu bewirken, und dies in Reaktion darauf, dass die Übertragung der WLAN-Pakete endet.

8. Verfahren, das von einem funkbasierten Endgerät (100A) ausgeführt wird, Folgendes umfassend:
Betreiben (710) eines ersten Transceivers in einem funkbasierten Bluetooth-Netz (106A) zum Übertragen von Bluetooth Extended Synchronous Connection-Oriented, eSCO, Paketen gemäß einem Bluetooth-Kommunikationsprotokoll, wobei dieser in einem Funk-Kommunikationsband arbeitet;
Betreiben eines zweiten Transceivers in einem funkbasierten lokalen Netz, WLAN, (108A) zum Übertragen von WLAN-Paketen gemäß einem WLAN-Kommunikationsprotokoll, der in demselben Band wie das Funk-Kommunikationsband arbeitet;
Zuweisen (720) einer höheren Übertragungspriorität an die WLAN-Pakete als an die Bluetooth-eSCO-Pakete, wenn eine Übertragung oder erneute Übertragung der WLAN-Pakete mit einer erstmals auftretenden Übertragung der Bluetooth-eSCO-Pakete überlappt, um die Übertragung des erstmals auftretenden Bluetooth-eSCO-Pakets abzubrechen; und
wieder Zuweisen (722) einer höheren Übertragungspriorität an das abgebrochene Bluetooth-eSCO-Paket als an die WLAN-Pakete, wenn die Übertragung der WLAN-Pakete mit der erneuten Übertragung des abgebrochenen Bluetooth-eSCO-Pakets überlappt, um das abgebrochene Bluetooth-eSCO-Pakets in einem zugehörigen Fenster zur erneuten Übertragung zu übertragen.

9. Verfahren nach Anspruch 8, außerdem Folgendes umfassend:
das WLAN-Kommunikationsprotokoll erfüllt den IEEE 802.11b WLAN-Standard.

10. Verfahren nach Anspruch 8, außerdem Folgendes umfassend:
die WLAN-Pakete entsprechen Dateneinheiten des IEEE 802.11b Protokolls.

11. Verfahren nach Anspruch 8, außerdem Folgendes umfassend:
die erneute Übertragung des abgebrochenen Bluetooth-eSCO-Pakets findet in einem eSCO-Slot zur erneuten Übertragung statt.

12. Verfahren nach Anspruch 8, außerdem Folgendes umfassend:
Austauschen, durch das funkbasierte Endgerät (100A), von Voice over Internet Protocol, VoIP, Paketen als die WLAN-Pakete mit einem funkbasierten Zugangspunkt (140A), und dies unter Verwendung des IEEE 802.11 WLAN-Standards als dem WLAN-Kommunikationsprotokoll; und
Austauschen, durch das funkbasierte Endgerät (100A), von encodierten Audiodaten in Bluetooth-eSCO-Paketen mit einem funkbasierten Headset (101A), und dies unter Verwendung eines Bluetooth-Kommunikationsprotokolls.

13. Verfahren nach Anspruch 8, außerdem Folgendes umfassend:
Austauschen, durch das funkbasierte Endgerät (100A) und in den WLAN-Kommunikationen, von VoIP-Paketen als die WLAN-Pakete mit einem funkbasierten Zugangspunkt (140A), und dies entsprechend dem IEEE 802.11 b WLAN-Standard; und
Austauschen, durch das funkbasierte Endgerät (100A), von encodierten Audiodaten in Bluetooth-eSCO-Paketen mit einem funkbasierten Headset (101A), und dies unter Verwendung des Bluetooth Enhanced Data Rate, EDR, Protokolls; und
Herstellen, durch das funkbasierte Endgerät (100A), einer Verbindung mit dem Headset (101A) und Einrichten einer EDR-Paket-eSCO-Übertragungsstrecke mit dem Headset.

14. Verfahren nach Anspruch 8, außerdem Folgendes umfassend:
Bewirken, durch einen Kontroller (610), der Übertragung der abgebrochenen Bluetooth-eSCO-Pakete, wenn die Übertragung der WLAN-Pakete endet.

15. System, Folgendes umfassend:
ein funkbasiertes Endgerät (100A);
ein funkbasiertes Headset (101A);
einen ersten Transceiver (604) in dem funkbasierten Endgerät (100A), der dafür eingerichtet ist, in einem funkbasierten Bluetooth-Netz (106A) zu arbeiten, um Bluetooth Extended Synchronous Connection-Oriented, eSCO, Pakete gemäß einem Bluetooth-Kommunikationsprotokoll zu übertragen, um mit dem funkbasierten Headset (101A) in einem Funk-Kommunikationsband zu kommunizieren;
einen funkbasierten Zugangspunkt (140A);
einen zweiten Transceiver (602) in dem funkbasierten Endgerät (100A), der dafür eingerichtet ist, in einem funkbasierten lokalen Netz, WLAN, (108A) zum Übertragen von WLAN-Paketen gemäß einem WLAN-Kommunikationsprotokoll zu arbeiten, um mit dem Zugangspunkt (140A) in demselben Band wie das Funk-Kommunikationsband zu kommunizieren; und
einen Kontroller (610) in dem funkbasierten Endgerät (100A), der mit dem ersten und dem zweiten Transceiver gekoppelt und dafür eingerichtet ist, eine höhere Übertragungspriorität an die WLAN-Pakete als an die Bluetooth-eSCO-Pakete zuzuweisen, und dies in Reaktion darauf, dass eine Übertragung oder erneute Übertragung der WLAN-Pakete mit einer erstmals auftretenden Übertragung der Bluetooth-eSCO-Pakete überlappt, und der dafür eingerichtet ist, die Übertragung des erstmals auftretenden Bluetooth-eSCO-Pakets abzubrechen;
wobei der Kontroller (610) dafür eingerichtet ist, eine höhere Übertragungspriorität an das abgebrochene Bluetooth-eSCO-Paket als an die WLAN-Pakete wieder zuzuweisen, und dies in Reaktion darauf, dass die Übertragung der WLAN-Pakete mit der erneuten Übertragung des abgebrochenen Bluetooth-eSCO-Pakets überlappt, und der dafür eingerichtet ist, die abgebrochenen Bluetooth-eSCO-Pakets in einem zugehörigen Fenster zur erneuten Übertragung zu übertragen.

16. System nach Anspruch 15, wobei das WLAN-Kommunikationsprotokoll den IEEE 802.11b WLAN-Standard erfüllt.

17. System nach Anspruch 15, wobei außerdem die WLAN-Pakete Dateneinheiten des IEEE 802.11b Protokolls entsprechen.

18. System nach Anspruch 15, wobei die erneute Übertragung des abgebrochenen Bluetooth-eSCO-Pakets in einem eSCO-Slot zur erneuten Übertragung stattfindet.

19. System nach Anspruch 15, wobei
das funkbasierte Endgerät (100A) dafür eingerichtet ist, in den WLAN-Kommunikationen dem IEEE 802.11b WLAN-Standard entsprechend Voice over Internet Protocol, VoIP, Pakete als die WLAN-Pakete mit dem funkbasierten Zugangspunkt (140A) auszutauschen; und
das funkbasierte Endgerät (100A) dafür eingerichtet ist, unter Verwendung eines Bluetooth-Kommunikationsprotokolls encodierte Audiodaten in Bluetooth-eSCO-Paketen mit dem funkbasierten Headset (101A) auszutauschen.

20. System nach Anspruch 15, wobei
das funkbasierte Endgerät (100A) dafür eingerichtet ist, in den WLAN-Kommunikationen dem IEEE 802.11b WLAN-Standard entsprechend VoIP-Pakete als die WLAN-Pakete mit dem funkbasierten Zugangspunkt (140A) auszutauschen;
das funkbasierte Endgerät (100A) dafür eingerichtet ist, encodierte Audiodaten in Bluetooth-eSCO-Paketen mit dem funkbasierten Headset (101A) auszutauschen, und dies unter Verwendung des Bluetooth Enhanced Data Rate, EDR, Protokolls als dem Bluetooth-Kommunikationsprotokoll; und
das funkbasierte Endgerät (100A) dafür eingerichtet ist, eine Verbindung mit dem Headset (101A) herzustellen und eine EDR-Paket-eSCO-Übertragungsstrecke mit dem Headset (101A) einzurichten.

21. System nach Anspruch 15, wobei der Kontroller (610) dafür eingerichtet ist, die Übertragung der abgebrochenen Bluetooth-eSCO-Pakete zu bewirken, und dies in Reaktion darauf, dass die Übertragung der WLAN-Pakete endet.

22. Computerprogrammprodukt, das computerlesbares Medium umfasst, auf dem Computerprogrammanweisungen gespeichert sind, um einen Prozessor in einem Computersystem dazu zu befähigen, eine funkbasierte Kommunikationsvorrichtung so zu steuern, dass sie das Verfahren nach einem der Ansprüche 8 bis 14 ausführt, wenn die Computerprogrammanweisungen auf dem Prozessor ausgeführt werden.

## Revendications

1. Dispositif, comportant :
un moyen pour exploiter un premier émetteur-récepteur (604) dans un réseau Bluetooth sans fil (106A), destiné à communiquer des paquets synchrones étendus orientés connexion, eSCO, Bluetooth selon un protocole de communication Bluetooth, et opérant dans une bande de communication sans fil ;
un moyen pour exploiter un second émetteur-récepteur (602) dans un réseau local sans fil, WLAN (108A), destiné à communiquer des paquets de réseau WLAN selon un protocole de communication WLAN, et opérant dans la même bande que ladite bande de communication sans fil ;
un moyen (610) pour affecter une priorité de transmission plus élevée auxdits paquets de réseau WLAN qu'auxdits paquets synchrones eSCO Bluetooth, en réponse au fait que la transmission ou à la retransmission desdits paquets de réseau WLAN chevauche une transmission survenant en premier desdits paquets synchrones eSCO Bluetooth, et pour interrompre la transmission dudit paquet synchrone eSCO Bluetooth survenant en premier ; et
un moyen (610) pour réaffecter une priorité de transmission plus élevée audit paquet synchrone eSCO Bluetooth interrompu qu'auxdits paquets de réseau WLAN, en réponse au fait que la transmission desdits paquets de réseau WLAN chevauche la retransmission dudit paquet synchrone eSCO Bluetooth interrompu, et pour transmettre ledit paquet synchrone eSCO Bluetooth interrompu dans une fenêtre de retransmission associée.

2. Dispositif selon la revendication 1, dans lequel
ledit protocole de communication WLAN est conforme à la norme WLAN IEEE 802.11b.

3. Dispositif selon la revendication 1, dans lequel en outre
lesdits paquets de réseau WLAN sont conformes aux unités de données de protocole IEEE 802.11b.

4. Dispositif selon la revendication 1, dans lequel
ladite retransmission dudit paquet synchrone eSCO Bluetooth interrompu se situe dans une tranche de temps de retransmission synchrone eSCO.

5. Dispositif selon la revendication 1, dans lequel :
ledit dispositif est configuré de manière à échanger des paquets de protocole Voix sur IP, VoIP, sous la forme desdits paquets de réseau WLAN, avec un point d'accès sans fil (140A) conforme à la norme WLAN IEEE 802.11b dans des communications WLAN ; et
ledit dispositif est configuré de manière à échanger des données audio codées dans des paquets synchrones eSCO Bluetooth avec un casque sans fil (101A), en utilisant le protocole de communication Bluetooth.

6. Dispositif selon la revendication 1, dans lequel :
ledit dispositif est configuré de manière à échanger des paquets de protocole VoIP, sous la forme desdits paquets de réseau WLAN, avec un point d'accès sans fil (140A) conforme à la norme WLAN IEEE 802.11b dans lesdites communications WLAN ;
ledit dispositif est configuré de manière à échanger des données audio codées dans des paquets synchrones eSCO Bluetooth, avec un casque sans fil (101A), en utilisant le protocole à débit de données amélioré, EDR, Bluetooth en tant que ledit protocole de communication Bluetooth ; et
ledit dispositif est configuré de manière à établir une connexion avec ledit casque (101A) et à définir une liaison synchrone eSCO de paquets de protocole EDR avec ledit casque (101A).

7. Dispositif selon la revendication 1, dans lequel en outre :
un contrôleur (610) est configuré de manière à permettre la communication desdits paquets synchrones eSCO Bluetooth interrompus, en réponse à l'arrêt de la transmission desdits paquets de réseau WLAN.

8. Procédé mis en oeuvre par un terminal sans fil (100A), comportant les étapes suivantes :
l'exploitation (710) d'un premier émetteur-récepteur dans un réseau Bluetooth sans fil (106A), destiné à communiquer des paquets synchrones étendus orientés connexion, eSCO, Bluetooth selon un protocole de communication Bluetooth, et opérant dans une bande de communication sans fil ;
l'exploitation d'un second émetteur-récepteur dans un réseau local sans fil, WLAN (108A), destiné à communiquer des paquets de réseau WLAN selon un protocole de communication WLAN, et opérant dans la même bande que ladite bande de communication sans fil ;
l'affectation (720) d'une priorité de transmission plus élevée auxdits paquets de réseau WLAN qu'auxdits paquets synchrones eSCO Bluetooth, lorsque la transmission ou la retransmission desdits paquets de réseau WLAN chevauche une transmission survenant en premier desdits paquets synchrones eSCO Bluetooth, en vue d'interrompre la transmission dudit paquet synchrone eSCO Bluetooth survenant en premier ; et
la réaffectation (722) d'une priorité de transmission plus élevée audit paquet synchrone eSCO Bluetooth interrompu qu'auxdits paquets de réseau WLAN, lorsque la transmission desdits paquets de réseau WLAN chevauche la retransmission dudit paquet synchrone eSCO Bluetooth interrompu, en vue de transmettre ledit paquet synchrone eSCO Bluetooth interrompu dans une fenêtre de retransmission associée.

9. Procédé selon la revendication 8, dans lequel en outre :
ledit protocole de communication WLAN est conforme à la norme WLAN IEEE 802.11b.

10. Procédé selon la revendication 8, dans lequel en outre :
lesdits paquets de réseau WLAN sont conformes aux unités de données de protocole IEEE 802.11b.

11. Procédé selon la revendication 8, dans lequel en outre :
ladite retransmission dudit paquet synchrone eSCO Bluetooth interrompu se situe dans une tranche de temps de retransmission synchrone eSCO.

12. Procédé selon la revendication 8, dans lequel en outre :
ledit terminal sans fil (100A) échange des paquets de protocole Voix sur IP, VoIP, sous la forme desdits paquets de réseau WLAN, avec un point d'accès sans fil (140A), en utilisant la norme WLAN IEEE 802.11 en tant que ledit protocole de communication WLAN ; et
ledit terminal sans fil (100A) échange des données audio codées dans des paquets synchrones eSCO Bluetooth avec un casque sans fil (101A), en utilisant le protocole de communication Bluetooth.

13. Procédé selon la revendication 8, dans lequel en outre :
ledit terminal sans fil (100A) échange des paquets de protocole VoIP sous la forme desdits paquets de réseau WLAN, avec un point d'accès sans fil (140A) conforme à la norme WLAN IEEE 802.11b dans lesdites communications WLAN ; et
ledit terminal sans fil (100A) échange des données audio codées dans des paquets synchrones eSCO Bluetooth avec un casque sans fil (101A), en utilisant le protocole à débit de données amélioré, EDR, Bluetooth ; et
ledit terminal sans fil (100A) établit une connexion avec ledit casque (101A) et définit une liaison synchrone eSCO de paquets de protocole EDR avec ledit casque.

14. Procédé selon la revendication 8, dans lequel en outre :
un contrôleur (610) permet la communication desdits paquets synchrones eSCO Bluetooth interrompus, lorsque la transmission desdits paquets de réseau WLAN prend fin.

15. Système, comportant :
un terminal sans fil (100A) ;
un casque sans fil (101A) ;
un premier émetteur-récepteur (604) dans ledit terminal sans fil (100A), configuré de manière à opérer dans un réseau Bluetooth sans fil (106A) destiné à communiquer des paquets synchrones étendus orientés connexion, eSCO, Bluetooth selon un protocole de communication Bluetooth, en vue de communiquer avec ledit casque sans fil (101A) dans une bande de communication sans fil ;
un point d'accès sans fil (140A) ;
un second émetteur-récepteur (602) dans ledit terminal sans fil (100A), configuré de manière à opérer dans un réseau local sans fil, WLAN (108A), destiné à communiquer des paquets de réseau WLAN selon un protocole de communication WLAN, en vue de communiquer avec ledit point d'accès sans fil (140A) dans la même bande que ladite bande de communication ; et
un contrôleur (610) dans ledit terminal sans fil (100A), couplé auxdits premier et second émetteurs-récepteurs, configuré de manière à affecter une priorité de transmission plus élevée auxdits paquets de réseau WLAN qu'auxdits paquets synchrones eSCO Bluetooth, en réponse au fait que la transmission ou à la retransmission desdits paquets de réseau WLAN chevauche une transmission survenant en premier desdits paquets synchrones eSCO Bluetooth, et configuré de manière à interrompre la transmission dudit paquet synchrone eSCO Bluetooth survenant en premier ;
ledit contrôleur (610) étant configuré de manière à réaffecter une priorité de transmission plus élevée audit paquet synchrone eSCO Bluetooth interrompu qu'auxdits paquets de réseau WLAN, en réponse au fait que la transmission desdits paquets de réseau WLAN chevauche la retransmission dudit paquet synchrone eSCO Bluetooth interrompu, et configuré de manière à transmettre ledit paquet synchrone eSCO Bluetooth interrompu dans une fenêtre de retransmission associée.

16. Système selon la revendication 15, dans lequel
ledit protocole de communication WLAN est conforme à la norme WLAN IEEE 802.11b.

17. Système selon la revendication 15, dans lequel
lesdits paquets de réseau WLAN sont conformes aux unités de données de protocole IEEE 802.11b.

18. Système selon la revendication 15, dans lequel
ladite retransmission dudit paquet synchrone eSCO Bluetooth interrompu se situe dans une tranche de temps de retransmission synchrone eSCO.

19. Système selon la revendication 15, dans lequel
ledit terminal sans fil (100A) est configuré de manière à échanger des paquets de protocole Voix sur IP, VoIP, sous la forme desdits paquets de réseau WLAN, avec ledit point d'accès sans fil (140A) conforme à la norme WLAN IEEE 802.11b dans lesdites communications WLAN ; et
ledit terminal sans fil (100A) est configuré de manière à échanger des données audio codées dans des paquets synchrones eSCO Bluetooth avec ledit casque sans fil (101A), en utilisant le protocole de communication Bluetooth.

20. Système selon la revendication 15, dans lequel
ledit terminal sans fil (100A) est configuré de manière à échanger des paquets de protocole VoIP sous la forme desdits paquets de réseau WLAN, avec ledit point d'accès sans fil (140A) conforme à la norme WLAN IEEE 802.11b dans lesdites communications WLAN ;
ledit terminal sans fil (100A) est configuré de manière à échanger des données audio codées dans des paquets synchrones eSCO Bluetooth, avec ledit casque sans fil (101A), en utilisant le protocole à débit de données amélioré, EDR, Bluetooth en tant que ledit protocole de communication Bluetooth ; et
ledit terminal sans fil (100A) est configuré de manière à établir une connexion avec ledit casque (101A) et à définir une liaison synchrone eSCO de paquets de protocole EDR avec ledit casque (101A).

21. Système selon la revendication 15, dans lequel
ledit contrôleur (610) est configuré de manière à permettre la communication desdits paquets synchrones eSCO Bluetooth interrompus, en réponse à l'arrêt de la transmission desdits paquets de réseau WLAN.

22. Produit-programme informatique comprenant un support utilisable par ordinateur sur lequel est enregistrée une logique de programme informatique, en vue de permettre à un processeur dans un système informatique de commander à un dispositif de communication sans fil de mettre en oeuvre le procédé selon l'une quelconque des revendications 8 à 14, lorsque la logique de programme informatique est exécutée sur le processeur.
